Europäisches Patentamt

European Patent Office

Office européen des brevets

(19)

(11) Veröffentlichungsnummer : **0 077 436 B2**

(12) # NEUE EUROPÄISCHE PATENTSCHRIFT

(45) Veröffentlichungstag der neuen Patentschrift :
07.03.90

(21) Anmeldenummer : 82106498.7

(22) Anmeldetag : 19.07.82

(51) Int. Cl.⁵ : **C 11 B  1/10**, B 01 J  8/08, B 01 J  8/44, F 26 B  17/00

(54) Verfahren und Vorrichtung zum Entbenzinieren von bei der Extraktion mit organischen Lösemitteln anfallendem flockigem oder körnigem pflanzlichem Rückstandsmaterial.

(30) Priorität : 20.07.81 DE 3128596

(43) Veröffentlichungstag der Anmeldung :
27.04.83 Patentblatt 83/17

(45) Bekanntmachung des Hinweises auf die Patenterteilung : 02.05.85 Patentblatt 85/18

(45) Bekanntmachung des Hinweises auf die Entscheidung über den Einspruch : 07.03.90 Patentblatt 90/10

(84) Benannte Vertragsstaaten :
BE DE FR GB IT NL

(56) Entgegenhaltungen :
DE--B-- 1 014 422
DE--B-- 1 016 238
DE--B-- 1 133 969
DE--B-- 1 185 753
DE--B-- 2 608 712
US--A-- 2 585 793
US--A-- 2 776 894
FETTE - SEIFEN - ANSTRICHMITTEL, Band 78, Nr. 2, Februar 1976, Seiten 56-59, Hamburg, DE., H. SCHUMACHER: "Der Desolventizer-Toaster-Trockner-Kühler (TTK), ein neues Verfahren bei der Verarbeitung von Ölsaaten"
Ullmanns Encyklopädie der techn. Chemie, 4. Aufl. (1976) Bd. 11, S. 474-475

(73) Patentinhaber : **Schumacher, Heinz**
Höperfeld 26
D-2050 Hamburg 80 (DE)

(72) Erfinder : **Schumacher, Heinz**
Höperfeld 26
D-2050 Hamburg 80 (DE)

(74) Vertreter : **Glaeser, Joachim, Dipl.-Ing. et al**
Patentanwälte DIEHL GLAESER HILTL & PARTNER
Königstrasse 28
D-8000 Hamburg 50 (DE)

EP 0 077 436 B2

## Beschreibung

Die Erfindung betrifft ein Verfahren und eine Vorrichtung zum schonenden, energiesparenden und umweltbewussten Entbenzinieren von wärmeempfindlichen, flockigen oder gekörnten, bei der Extraktion von Naturstoffen pflanzlicher Herkunft, insbesondere von Saatgut, mit Hilfe organischer Lösemittel anfallendem Rückstandsmaterial, sogenanntes Schrot, das im kontinuierlichen Prozess mit Wasserdampf oder einem wasserdampfhaltigen Fluid behandelt und dadurch vom Lösemittel befreit wird.

Es handelt sich somit beim Verfahren und bei der Vorrichtung, die zur Durchführung des Verfahrens geeignet ist, um solche Prozesse, bei denen aus dem lösemittelnassen Rückstand der Extraktion das Lösemittel weitgehend, wenn nicht sogar vollkommen, ausgetrieben werden soll. Neben Feuchtigkeit bis zu 22 Gew.-% und darüber können derartige Schrote noch 25 Gew.-% und mehr, gelegentlich sogar bis zu 35 Gew.-% Lösemittel aufweisen. Diese erheblichen Mengen an Lösemittel müssen nicht nur aus Gründen der Ökonomie einer Extraktionsanlage zurückgewonnen werden, es müssen auch entbenzinierte Schrote anfallen, die die Weiterverwertung bedenkenlos erlauben.

Von der Erfindung werden insbesondere solche lösemittelnassen Schrote angesprochen, wie sie bei der Extraktion von Saatgut wie Sojabohnen, Raps, Sonnenblumenkernen, Rübsamen, Nussmaterial usw. in der Öl- und Fettindustrie mit Hilfe von vorwiegend niedrigsiedenden Kohlenwasserstoffen anfallen. Die dabei verwendeten Löse- bzw. Extraktionsmittel sind u. a. Benzin, Propan, Butan, Pentan, Hexan oder Mischlösungsmittel wie z. B. Mischungen der vorstehend genannten Kohlenwasserstoffe mit Alkoholen, Ketonen bzw. ganz allgemein polaren Lösemitteln usw.

Die bei der Extraktion vorstehend genannter Rohstoffe mit den jeweils geeigneten Lösemitteln gebildete, aus Lösemittel und von diesem aufgenommenen Ölen und Fetten bestehende sogenannte Miscella wird vom Rückstand (Schrot) getrennt und der weiteren Verarbeitung (Reinigung, Destillation, Lösemittelabtreibung usw.) zugeführt.

Der Rückstand der Extraktion, eben die vorstehend genannten Schrote aus Rückstandsmaterial, Lösemittel und Wasser, wird in der Entbenzinierung zur Gewinnung des Lösemittels und eines lösemittelarmen bzw. -freien Schrots wie vorstehend bereits angedeutet, behandelt.

Für diese Entbenzinierung geeignete Verfahren und Vorrichtungen sind seit langem bekannt und werden von der einschlägigen Industrie unter den Begriffen Toaster, Entbenzinierer, Trockner oder Dämpfer in vielen mehr oder weniger leistungsfähigen Ausführungen angeboten. Dabei wird insbesondere mit Wasserdampf oder diesen enthaltenden Fluiden im vorwiegend kontinuierlichen Betrieb der Extraktionsrückstand vom anhaftenden Lösemittel weitgehend befreit und letzteres in die Extraktion zurückgeführt.

Aus der US-A Nr. 2585792 ist z. B. ein insbesondere für extrahierte Sojabohnenflocken (Sojaschrot) entwickelter sogenannter Toaster bekannt, bei dem im oberen Bereich eines mehretagigen Systems die Entbenzinierung und ggf. auch Trocknung durch Direkteinspeisung von Dampf in das lösemittelhaltige Material erfolgt.

Ein bekannter und im Bereich der technischen Öl- und Fettgewinnung vielfach eingesetzter Entbenzinierer, der auf dem Prinzip der Gegenstromeinwirkung von Dampf und ggf. heisser Luft auf das lösemittelnasse Schrot beruht und auf die Entwicklungsarbeiten des Anmelders vorliegender Erfindung zurückgeht, wird in « Fette-Seifen-Anstrichmittel », 78(1976), S. 56 bis 59, beschrieben.

Diese auch als Desolventizer-Toaster-Trockner-Kühler (TTK) bezeichnete Vorrichtung arbeitet voll kontinuierlich und verwendet in der Entbenzinierungsstufe reinen Wasserdampf.

Dabei wird das über eine Schleuse kontinuierlich eingebrachte lösemittelnasse Material in einem geschlossenen, ein- oder mehretagig ausgebildeten Behälter dem Dampf entgegengeführt, auf dem oder den die einzelnen Etagen nach unten begrenzenden Böden durch mehrarmige, an einer zentralen Rührwelle befestigen Rührelemente ständig bewegt. Nach Ablauf einer vorbestimmten Zeit gelangt das Material entweder in die nächstfolgende Stufe oder es tritt über Drehschleusen aus der Vorrichtung aus.

Während dieses Vorgangs wird über die als Doppelböden ausgebildeten Etagenböden das Behandlungsmedium, im speziellen Falle der Entbenzinierung der Wasserdampf, durch die gelochte obere Bodenplatte in die daran anschliessende Etage eingespeist. Der Dampf für die Entbenzinierung oder Heissluft für die anschliessende Trocknung (auf einer nachfolgenden Etage) durchströmt das auf der Lochplatte durch die Rührelemente bewegte Material und verlässt zusammen mit dem ausgetriebenen Lösemittel als sogenannte Brüden die Anlage.

Mehretagige Vorrichtungen dieser Art dienen vielfach auch der gleichzeitigen Trocknung und Kühlung des entbenzinierten Materials, wobei die Entbenzinierung in der obersten bzw. ersten Etage des Mehrstufensystems erfolgt.

In der aus « Fette-Seifen-Anstrichmittel » (loc. cit.) bekannten Vorrichtung wird somit das lösemittelnasse Material (Schrot) durch direkte Dampfeinwirkung über die gelochten, oberen Platten der Doppelböden entbenziniert. Das Schrot verlässt — ob mit oder ohne anschliessende Trocknung und Kühlung — als lösemittelarmes bzw. lösemittelfreies Material im kontinuierlichen Strom die Anlage. Dabei werden äusserst einheitliche Verweilzeiten und gleichmässige Dampfbeauschlagung erreicht, Ergebnisse, die als besonders wichtige Vorteile der bekannten Vorrichtung zu werten sind.

Mit gelochtem Doppelboden arbeitet auch eine Vorrichtung, die in der US-A Nr. 2776894 beschrieben

EP 0 077 436 B2

wird. Aufgrund des allgemeinen apparativen Aufbaus dieser Vorrichtung ist es jedoch erforderlich, zwecks Erreichung eines einigermassen zufriedenstellenden . Entbenzinierungsgrades zusätzlich Direktdampf über den Böden in das Material einzuleiten. Dadurch kommt es zu Überhitzungen, Materialverklebungen und ungewöhnlich hohem Dampfverbrauch.

Die DE-C Nr. 2608712 betrifft eine dem gleichen Zweck dienende Vorrichtung, bei der Direktdampf durch den untersten, als Loch- bzw.. Siebboden ausgebildeten Dampfverteiler eines Mehretagensystems in den Behälter eingebracht und über ebenfalls gelochte Etagenzwischenböden dem lösemittelnassen Material über die gesamte Behälterhöhe von unten nach oben entgegengeführt wird.

Zusätzlich kann über weitere Dampfeinlässe jede Etage selbst noch mit Dampf beschickt werden, damit Übersättigung des von unten nach oben strömenden Dampfes bzw. Kondensation dieses Dampfes in den oberen, weniger heissen Bereichen der Vorrichtung vermieden wird. Auch ist es durch die zusätzliche Dampfeinspeisung in die einzelnen Etagen möglich, innerhalb des Gesamtsystems ein gewünschtes Temperaturdiagramm aufrechtzuhalten bzw. einzustellen.

Die Vorrichtung gemäss DE-C Nr. 2608712 erzielt bereits eine relativ gleichmässige Dampfverteilung und -beaufschlagung, was nicht zuletzt auf die durchgehende Lochung aller Böden, also auch der Etagenzwischenböden, zurückzuführen ist. Das Material wird in dieser Vorrichtung sehr schonend behandelt und der Lösemittelaustrieb bei niedrigem Dampfverbrauch sowie verbesserter allgemeiner Energieausbeute auf sehr niedrige Restwerte gebracht.

Zum Stand der Technik muss auch die DE-C Nr. 1133969 gerechnet werden, die eine Vorrichtung mit mittig um die zentral gelegene vertikale Drehachse angeordneten Hohlböden beschreibt.

Die Hohlböden füllen nur einen Teil, vorwiegend nur die Hälfte des Apparatequerschnitts aus, so dass nur dieser Teil der Böden mit Dampf beaufschlagt werden kan. Dabei ist vorgesehen, dass die mittlere Bodenanordnung eine nach oben gelochte Platte aufweist, durch die Zusatzdampf eingespeist werden kann, während die Hauptmenge an Dampf durch seitlich angeordnete Stutzen direkt in die einzelnen Kammern (Etagen) eintritt.

Es hat sich jedoch bei allen bisher bekannt gewordenen und mit einfach gelochten Böden ausgestatteten Vorrichtungen der beschriebenen Art gezeigt, dass eine glatte Lochbohrung zur Ausbildung sogenannter Dampfkanäle führt, die eine gleichmässige Beaufschlagung des zu entbenzinierenden Materials nur noch bedingt zulassen, so dass der eingespeiste Dampf zu einem erheblichen Anteil ungenutzt durch das Material strömt und damit ungenutzt die Anlage verlässt. Der erhaltene Grad der Entbenzinierung ist äusserst mangelhaft. Nur durch erheblichen Mehraufwand an Dampf können einigermassen brauchbare, d. h. lösemittelarme Schrote gewonnen werden. Der Mehraufwand an Dampf stellt jedoch die Wirtschaftlichkeit all dieser Vorrichtung in Frage, zumal auch ein erhöhter Energieaufwand für den Antrieb der Rührwerke notwendig ist, um den Widerstand des nassen Materials bei hoher Dampfbeaufschlagung zu überwinden.

Von weiterer Bedeutung ist auch die Tatsache, dass einfache Bodenlochungen ständig durch eingedrungene Schrotpartikeln verstopft werden, insbesondere dann, wenn ein Rührwerk zur Bewegung und Umwälzung des Materials über den Boden streicht. Die Reibung des Materials aneinander oder in Berührung mit den Rührelementen und der Bodenoberfläche hat eine laufende Zerkleinerung des Schrots zur Folge, die das Eindringen der Partikel in die Bodenlochungen begünstigt.

Aus diesem Grunde weisen die Böden gemäss DE-C Nr. 2608712 bereits nach oben leicht abgerundete Lochungen auf, wodurch nach Art eines Venturisystems die eingedrungenen Materialpartikeln wieder herausgeschleudert werden. Darüber hinaus kann durch die Abrundung der Lochkanten die Gefahr der Dampfkanalbildung weitgehend vermindert werden.

Die DE-B-11 85 753 beschreibt eine Vorrichtung zur Behandlung lösemittelhaltiger Rückstände der Ölsaatenextraktion durch Austreiben des Lösemittels und anschließendes Toasten. Es sind hierfür mehrere, in Abständen untereinander angeordnete, als Hohlkörper ausgebildete Etagenböden vorgesehen, die mit Öffnungen für den Durchtritt des Behandlungsgutes, sowie mit um die Gehäuseachse rotierenden Rührern über jedem Boden ausgestattet sind. Dabei weist jeder Etagenboden eine Vielzahl über die Bodenfläche verteilter, spalt- oder lochförmiger Brüdendurchlässe auf. Als Brüdendurchlässe können zahlreiche hohle Bolzen verwendet werden.

Die Böden dieser bekannten Vorrichtung sind indirekt mit Dampf beheizbar. Weiter sind Zuführungen für Direktdampf zu jeder Etage (Bodeneinheit) vorgesehen. Schließlich kann auch über die Rührwerkswelle und die Rührelemente selbst eine Dampfzufuhr erfolgen.

Im Rahmen der Weiterentwicklung einer Vorrichtung und der Arbeitsweise einer Vorrichtung nach DE-B-11 85 753 für ein Verfahren zum Entbenzinieren von bei der Extraktion mit organischen Lösemitteln anfallendem flockigen oder körnigen Material mit Wasserdampf bzw. wasserdampfhaltigen Fluiden wurde überraschend gefunden, daß die Dampfverteilung im zu behandelnden Material verbessert, die Bildung sogenannter Dampfkanäle (und damit ein erhöhter, ungenutzter Dampfverbrauch) sowie das Aufreißen des Materials auf den Etagenböden, eine Überhitzung des Materials, die Kondensation von Wasserdampf auf dem Material, und das Eindringen von Materialteilchen in die Bodenlochungen unterbunden bzw. vermieden werden kann, bei gleichzeitig gesteigerter Stoff- und Energieausbeute (Dampfverbrauch, Energie zum Antreiben der Rührwelle, Materialdurchsatz pro Zeiteinheit, Lösemittelgehalt im entbenzinierten Schrot, Grad der Lösemittelrückgewinnung usw.), wenn gemäß den kennzeichnenden Merkmalen der Erfindung :

3

der zum Entbenzinieren eingesetzte Wasserdampf in überhitzter Form mit einer Temperatur von mindestens 120 °C (Normaldruck) vorliegt ;

dieser überhitzte Wasserdampf bzw. das diesen enthaltende Fluid mindestens zu 45 %, insbesondere jedoch insgesamt, d. h. bis zu 100 %, unter dem untersten Etagenboden eingeführt wird, und

die gebildeten Brüden aus Wasserdampf und Lösemittel mit einer Temperatur von 64 bis 69, insbesondere zwischen 66 und 68 °C, abgezogen werden.

Eine erfindungsgemäße, zur Durchführung des Verfahrens geeignete Vorrichtung ist Gegenstand des Patentanspruchs 5.

Durch die Kombination der dem erfindungsgemässen Verfahren zugrunde liegenden Merkmale gelingt es erstmals, ein entbenziniertes Material (Schrot) zu gewinnen, das praktisch kein Lösemittel (Extraktionsmittel) mehr enthält oder dessen Lösemittelgehalt derart niedrig liegt, dass die Grenzen der Toxizität als auch die Bereiche der möglichen Ausbildung explosiver Gemische nicht über- bzw. unterschritten werden.

Darüber hinaus kommt es auf den einzelnen, die Behandlungsstufen oder Etagen nach unten begrenzenden Lochplatten oder auch im zu entbenzinierenden Material selbst nicht mehr zu Kondensation von Dampf, dadurch bedingt, dass die Konstruktion der Lochplatten, der Einsatz von überhitztem Dampf und die sich ständig wiederholende Neuverteilung des überhitzten Dampfes beim Austritt aus den Lochplatten zu einem sogenannten Strippvorgang führt, der eine gleichmässige Lösemittelaustragung ohne Kanalbildung bewirkt, örtliche Kondensationen von Wasserdampf sofort wieder aufhebt, das lösemittelnasse oder auch teilentbenzinierte Material auf den oberen Böden in einem gleichmässigen Schwebezustand hält, wodurch auch die Antriebswelle des Rührsystems entlastet wird und schliesslich eine Temperatur der abziehenden Brüden ermöglicht, die einer optimalen Zusammensetzung des Azeotrops $H_2O$-Dampf/Hexan (beispielhaft) nahekommt.

Wird die erfindungsgemässe Bedingung des Einsatzes von überhitztem Dampf nicht erfüllt, d. h. wird durch mangelnde Isolierung der Vorrichtung, durch Einsatz von kondensathaltigem Dampf, durch Kondensatanreicherung im Dampf aus der Feuchtigkeit des Einsatzmaterials, durch nichtausreichende Temperaturerhaltung der Doppelböden usw. ein Dampf mit kondensierten $H_2O$-Anteilen eingesetzt oder im Verfahren erzeugt, so können die angestrebten Vorteile und Verbesserungen, die das erfindungsgemässe Verfahren bietet, nicht erfüllt werden.

Sattdampf ist somit für die Durchführung des erfindungsgemässen Verfahrens nicht geeignet. Selbst bei Verwendung eines mit einer Temperatur von z. B. 180 °C (10 bar) vom Dampfkessel angelieferten und beim Eintritt in die Entbenzinierungsvorrichtung auf 1 bar entspannten gesättigten Dampfes lässt sich die Abscheidung von Kondensat nicht verhindern. Damit wird aber der für eine glatte und vollkommene Entbenzinierung notwendige Strippvorgang auf den Doppelböden bzw. im Material unterbunden bzw. nicht erreicht. Die Feuchtigkeit im Material kann ansteigen, der Energieaufwand für die Bewegung des Materials auf den Lochböden nimmt zu und der Grad der Entbenzinierung geht zurück. Um hier einen Ausgleich zu schaffen, wären zusätzliche Dampfmengen notwendig, die aber ihrerseits wieder die Wirtschaftlichkeit insbesondere solcher Verfahren mit Durchsätzen von 1 000 t Nassgut/24 h in Frage stellen.

Bei der Verwendung von nicht absolut trockenem, d. h. nicht überhitztem und damit kondensathaltigem sogenanntem Sattdampf für die Entbenzinierung des lösemittelnassen Materials werden selbst beim Einsatz von erst in jüngster Zeit entwickelten Vorrichtungen etwa in Anlehnung an « Fette-Seifen-Anstrichmittel » (loc. cit.) oder DE-C Nr. 2608712 immer noch Hexanrestanteile von 0,04 bis 0,1 (bei hexanhaltigem Sojaschrot) bzw. 0,1 bis 0,2 Gew.-% (bei hexannassem Rapsschrot) gemessen.

Diese Restanteile von freiem Hexan (bzw. diesem ähnlichen Extraktionsmitteln) im entbenzinierten Material bereiten aber immer noch erhebliche Schwierigkeiten und Probleme, obwohl diese Werte gegenüber früheren Extraktionsverfahren und -vorrichtungen bereits eine erhebliche Verbesserung darstellen. Schwierigkeiten bieten die vorstehend genannten Restanteile an Extraktionsmittel im entbenzinierten Schrot insbesondere bei Verladen und Transport auf Schiffen, beim Lagern in Silos oder beim Abpacken und Transport in Papiersäcken und ähnlichen Emballagen, da während dieser Behandlung (Verpackung, Lagerung, Transport) die Restanteile an Lösemitteln — insbesondere bei übernormalen Temperaturen oder bei direkter Sonneneinwirkung — desorbiert werden und mit der in der Umgebung oder auch in den Zwischenvolumina des Schrots enthalteneri Luft explosive Gemische bilden.

So liegt z. B. die untere Explosionsgrenze von n-Hexan (eines der wichtigsten Extraktionsmittel für z. B. Sojaflocken, Raps, Leinsamen usw.) in Luft bei 20 °C bei 1,12 Vol.-%. Gemäss den Richtlinien der IHA (International Health Association) darf jedoch beim Arbeiten mit hexanhaltigen Materialien der Hexangehalt in der Luft 125 ppm nicht überschreiten. Hexan gehört zur Gruppe des Anästhetika. Hexangehalte in der Luft von nur 1 Vol.-% können bereits zum Tod führen. Ähnliche Werte gelten auch für vergleichbare Extraktionsmittel wie Pentan, Butan, Heptan, Gemische aus n- und iso-Hexan oder Gemische dieser und anderer Kohlenwasserstoffe miteinander.

In diesem Zusammenhang sei auch auf die vielen in der Vergangenheit bekannt gewordenen Explosionen und Brände in Lagerhallen, Silos, auf Schiffen, insbesondere beim Transport in wärmere Zonen, hingewiesen, die eine noch immer nicht bewältigte Gefahr darstellen.

Darüber hinaus sind die toxischen Eigenschaften der Lösemittel für die Extraktion von Öl- und fetthaltigem pflanzlichem Material auch deshalb für die Volkswirtschaft von nicht zu unterschätzender Bedeutung, weil gerade die entbenzinierten Extraktionsrückstände (Schrote) von Soja, Raps, Leinsamen, Nuss- und Kerngut, Sonnenblumenkernen, Mais usw. als Futtermittel, ja selbst als Nahrungsmittel insbesondere in den Entwicklungsländern mehr und mehr zum Einsatz kommen und hier — bei nicht sachgerechter, d. h. nicht vollkommener Entbenzinierung — verheerende Wirkungen zur Folge haben.

Erstmals ist es mit den Massnahmen der Erfindung gelungen, entbenziniertes Extraktionsrückstandsmaterial (Schrot) zu gewinnen, das praktisch kein Lösemittel (Extraktionsmittel) mehr enthält oder bei dem der Gehalt an toxischen und mit Luft explosive Gemische bildenden Extraktionsmitteln derart niedrig ist, dass selbst bei ungünstigen Betriebsverhältnissen die vorstehend abgeleiteten Gefahren eliminiert sind.

Darüber hinaus wird bei Anwendung der erfindungsgemässen Massnahmen der Feuchtigkeitsgehalt (Wassergehalt) des eingesetzten lösemittelnassen Schrots, bedingt durch den nur mit überhitztem Dampf erreichbaren Strippvorgang beim Austritt aus den ganz speziell konstruierten Doppelböden mit spezifisch ausgebildeten Bohrungen, kaum verändert, was erneut eine Bestätigung für die nicht stattfindende Dampfkondensation darstellt. Ausserdem wird auch eine erhebliche Menge an Entbenzinierungsdampf eingespart.

So wurden z. B. in einer bekannten Anlage der zum Stand der Technik gehörenden Art und Verwendung von Sattdampf bzw. nicht überhitztem Dampf erhebliche Wasseranreicherungen im entbenzinierten Material festgestellt.

Ein mit 15 Gew.-% Wassergehalt in die Entbenzinierung eintretendes hexannasses Sojaschrot z. B. wies bei Verwendung von Sattdampf beim Austritt aus der Entbenzinierung einen Wassergehalt von 22 Gew.-% auf. Zwar stört dieser Wassergehalt die Qualität des entbenzinierten Schrots wenig, da ja noch eine Trocknung des Materials erfolgt. Der im austretenden entbenzinierten Gut enthaltene Wassergehalt wurde aber durch Kondensation des Entbenzinierungsdampfes eingebracht, so dass entsprechend der Differenz der Ein- und Ausgangswerte ein erheblicher, ungenutzter Dampfverbrauch zu verzeichnen ist.

Die Folge ist erneut entweder ein höherer Dampfaufwand oder aber ein höherer Energieaufwand für die anschliessende Trocknung (z. B. mit Heissluft).

Schliesslich werden durch das erfindungsgemässe Verfahren — abgesehen von dem beim Einsatz von Sattdampf grundsätzlich erforderlichen Mehraufwand zum Austreiben von Kondensat oder zur Beibehaltung eines ursprünglichen Wassergehalts im entbenzinierten Material — auch aufgrund des höheren theoretischen Wärmeinhalts von überhitztem Dampf erhebliche Dampfmengen eingespart. Hierzu nachstehende Gegenüberstellung :

Ein entöltes, also der Extraktion mit einem Lösemittel, im vorliegenden Falle Hexan, unterworfenes Sojarückstandsmaterial (hexannasses Sojaschrot) enthält im Durchschnitt ca. 15 Gew.-% Wasser und zwischen 30 und 35 Gew.-% Hexan. Dies bedeutet, dass beim Einsatz von 1 500 kg hexannassem Schrot ca. 500 kg Hexan in der Entbenzinierung auszutreiben sind.

Das Schrot wird mit einer durchschnittlichen Temperatur von ca. 60 °C (aus der Extraktion nach Abtrennen der ölhaltigen Miscella) dem Entbenzinieren aufgegeben und bei ca. 105 °C mit Wasserdampf behandelt. Dabei sind für 1 000 kg hexanfreies Schrot 1 000 × 0,5 (spez. Wärme) × (105 — 60 = 45 °C etwa 22 500 kcal (94 203 kj)) erforderlich. Weiter sind 500 kg Hexan zu verdampfen, 500 × 85 (Verdampfungswärme) = ca. 42 500 kcal (177 939 kj). Insgesamt sind somit für die Entbenzinierung von 1 500 kg hexannasses Schrot mit ca. 33 Gew.-% Hexan ca. 65 000 kcal (272 142 kj) theoretisch erforderlich. Unter Berücksichtigung der üblichen Energieverluste durch die herrschenden Betriebsbedingungen (ca. 8 %) ergibt dies ein praxisnaher Wärmeaufwand von 70 000 kcal (293 076 kj).

Bei Einsatz von Sattdampf (Wärmeinhalt 640 kcal/kg) (2 680 Kj/kg) sind hierfür 109,4 kg Dampf erforderlich.

Bei Einsatz von überhitztem Dampf (Wärmeinhalt 695 kcal/kg) (2 910 kj/kg) genügen 100,6 kg, somit also eine Einsparung von 8,8 kg Dampf pro 1 000 kg entbenziniertes Schrot.

Bei den heutigen Grossanlagen mit Durchsatzmengen in der Grössenordnung von über 1 Million Jahrestonnen hexannassem Schrot, z. B. Sojaschrot, sind dies über 8 000 t Dampf.

Zunächst sei anhand der Fig. 1 bis 5 die erfindungsgemässe Vorrichtung beschrieben, die insbesondere für die Durchführung des neuen Verfahrens geeignet ist.

Von den Fig. 1 bis 5 zeigen

Fig. 1 den Gesamtaufbau einer erfindungsgemässen Vorrichtung schematisch und unter Weglassung aller selbstverständlichen und für die Erfindung selbst nicht entscheidenden Konstruktions- und Überwachungselemente ;

Fig. 2 die zur Ausbildung der Doppelböden verwendeten und Bohrungen aufweisenden Distanzstücke mit Angaben gebräuchlicher Grössenverhältnisse ;

Fig. 3 mehrere nebeneinander angeordnete Distanzstücke und ihr Abstandsverhältnis zueinander ;

Fig. 4 und Fig. 5 weitere Ausgestaltungsmöglichkeiten der Distanzstücke.

Ausserdem zeigen

Fig. 6 ein schematisches Mehretagensystem mit Temperaturmessstellen gemäss Tabelle I der Beschreibung, und

Fig. 7 den Wasserdampfgehalt in den austretenden Brüden als Funktion der Brüdentemperatur.

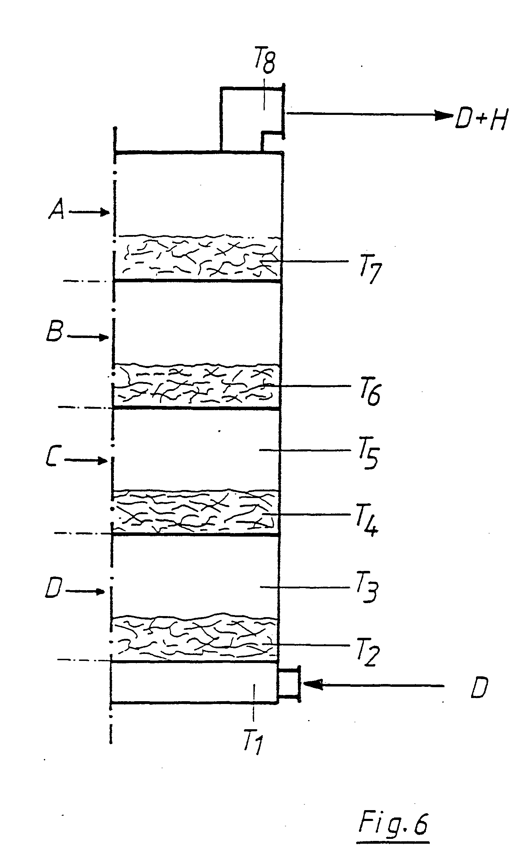

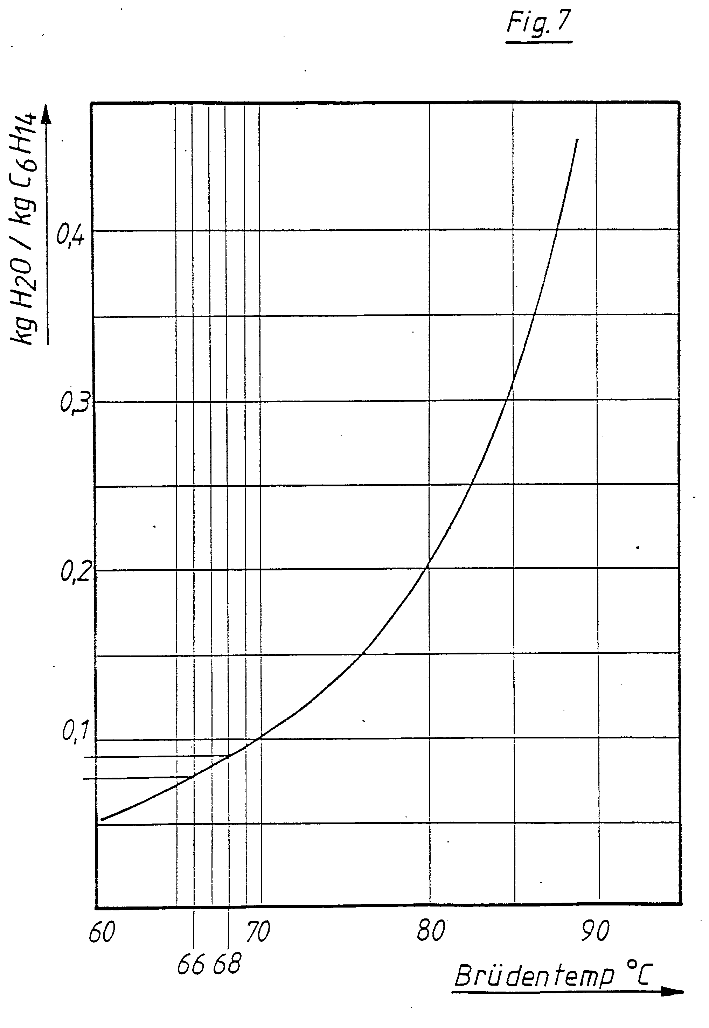

Auf die Bedeutung der Fig. 6 und 7 wird später im Anschluss an die Diskussion und Beschreibung der erfindungsgemässen Vorrichtung näher eingegangen.

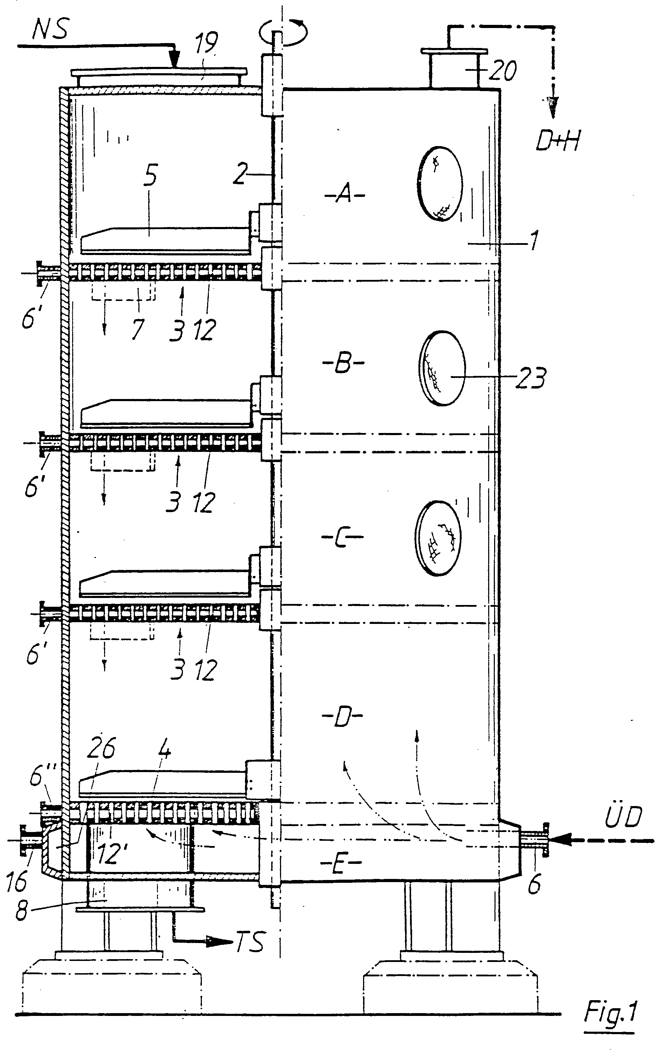

Gemäss Fig. 1 besteht die Vorrichtung aus dem insbesondere zylindrisch ausgebildeten Reaktionsbehälter 1 mit mittig eingezogener Antriebswelle 2 zur Horizontalbewegung einer der der Zahl der Behandlungsstufen A, B, C, D... entsprechenden Anzahl von Rührarmen 5. Auf die Darstellung des Antriebs für die Rührwelle 2 oder die genaue Angabe deren Halterung und Lagerung usw. im Reaktionsbehälter 1 wurde verzichtet, da derartige Konstruktionselemente dem Durchschnittsfachmann selbsverständlich sind. Dies gilt auch — und das sei hier grundsätzlich gesagt — für alle sonstigen Hilfsmittel des Apparatebaus, wie Ventile, Rohrleitungen, Mess- und Regelemente, Zusatzaggregate wie Wärmeaustauscher, Dosiereinrichtungen, Füll- und Austragsorgane, Zyklone, Kondensatabscheider usw.

Die Rührarme 5 bewegen sich mit geringem Abstand über die Böden 3 der Behandlungsstufen (Etagen) bzw. dem untersten Boden 4, der ausschliesslich der Dampfverteilung dient. Durch die Bewegung der Rührarme 5 wenig oberhalb der Böden 3, 4 wird das über eine geeignete Dosiervorrichtung (Schleuse, Zellenrad, Schnecke usw.) durch den Stutzen 19 eingebrachte lösemittelnasse Material (von der Extraktion : NS) in mischender Bewegung gehalten.

Das Material, z. B. hexannasser Rückstand der Extraktion von Sojaflocken oder einem öl- und fetthaltigen Gut anderer Provenienz, gelangt durch die Bewegung der Rührarme 5 zu geeigneten Austragsorganen 7, z. B. Drehschleusen der in « Fette-Seifen-Anstrichmittel » (loc. cit.) beschriebenen Art und durch diese in die darunter angeordnete Etage, also von A nach B, nach C usw., bis es über den untersten Stutzen 8 die Anlage verlässt (TS).

Gleichzeitig wird über den Stutzen 6 überhitzter Wasserdampf ÜD in die Anlage eingeleitet, und zwar unterhalb des untersten Bodens 4 in die Dampfverteilerkammer E.

Anstelle von reinem überhitztem Dampf kann auch ein solchen enthaltendes Fluid, wie Stickstoff, Luft, Inertgase usw., verwendet werden, doch wird bevorzugt mit reinem überhitztem Dampf gearbeitet.

Der in die Kammer E eingetretene überhitzte Dampf gelangt — in dargestellter Pfeilrichtung — durch die Lochungen des untersten Bodens 4 in die darüberliegende Etage D usw., durchströmt in gleichmässiger Verteilung und bei bleibender Überhitzung das auf dem jeweiligen Boden bewegte zu entbenzinierende Material und verlässt die Anlage als Brüden D + H über den Stutzen 20.

Die die Behandlungsstufen A, B, C, D... abschliessenden Böden sind als mit Dampf 6' beaufschlagbare Doppelböden ausgebildet, so dass die in den einzelnen Behandlungsstufen A, B, C, D... erforderliche oder gewünschte Temperatur sowohl des Dampfes bzw. der Brüden als auch des Materials eingestellt und geregelt werden kann.

Von besonderer Bedeutung für das Gelingen einer vollkommenen oder praktisch vollkommenen Entbenzinierung des lösemittelnassen Materials NS ohne Dampfkondensation bzw. ohne Zunahme des Feuchtigkeitsgehalts im entbenzinierten Gut bei erheblich verbessertem thermischen und energetischem Wirkungsgrad, wie es die Erfindung anstrebt und löst, ist die Aufrechterhaltung des überhitzten Zustandes des Dampfes innerhalb des gesamten Systems, insbesondere aber im Bereich der die Etagen abschliessenden Böden, im Bereich der Dampfkammer E usw., was nur durch eine absolute Isolierung der Vorrichtung, durch das Vorhandensein von dampfbeheizten Mänteln 26 etwa für die Dampfkammer E, aber auch für die Gesamtanlage — nicht eingezeichnet —, oder von sonstigen Beheizungsmöglichkeiten erreicht wird (Dampfeinlasstutzen 16).

Die Lochbohrungen der Doppelböden 3 werden durch einzelne gebohrte Distanzstücke 12 gebildet, auf deren Konstruktion nachfolgend näher eingegangen wird.

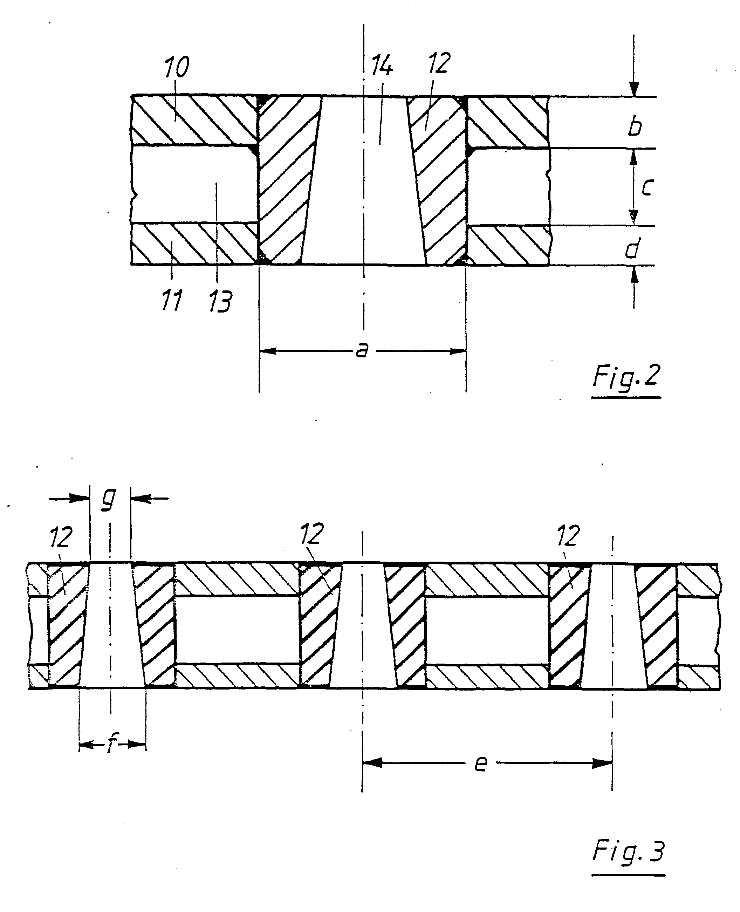

Wie die Fig. 2 und 3 zeigen, bestehen die Doppelböden 3 und ggf. auch der unterste, der Dampfverteilung dienende Boden 4 aus zwei Bodenplatten 10, 11, die zwischen sich einen Dampfraum 13 einschliessen. Dieser Dampfraum wird mit Direktdampf (6' in Fig. 1) beschickt. In die durch Bohrungen gebildeten Löcher der Platten 10, 11 sind erfindungsgemäss sogenannte Distanzstücke 12 eingesetzt, über die die Platten 10, 11 miteinander verbunden und gehalten sind. Die Verbindung erfolgt in bekannter Weise durch Verschweissen, so dass hierdurch ein dampfdichter Abschluss zwischen dem Dampfraum 13 und den Lochungen der Platten entsteht.

Die Distanzstücke 12 weisen ihrerseits Bohrungen 14 auf, die bevorzugt die Form gemäss Fig. 2 und 3 besitzen, d. h. sie verjüngen sich kegelartig vom unteren Ende — an der unteren Platte 11 des Doppelbodens 3 — zum oberen Ende — an der oberen Platte 10 des Doppelbodens.

Diese bevorzugte Konfiguration ist immer dann von Vorteil, wenn der von der untersten Dampfverteilerplatte (Boden 4) 6" kommende Prozessdampf auch als Trocknerdampf für besonders wasserhaltige Materialien, die also neben dem üblichen Hexangehalt von ca. 25 bis 35 Gew.-% einen übernormal hohen Feuchtigkeitsgehalt aufweisen, verwendet werden soll. Die Form der Distanzstücke nach Fig. 2 und 3 verleiht dem Dampf beim Austritt aus den Bohrungen 14 eine zusätzliche Spannung, die ein ausgeprägtes Sprudeln des überhitzten Dampfes und damit optimales Durchwirbeln des zu entbenzinierenden Materials, jedoch ohne Kanalbildung, zur Folge hat.

Die in Fig. 2 und 3 dargestellte Form der Distanzstücke hat sich auch zur Ausbildung des untersten Bodens 4, der ja letztlich nur der Dampfverteilung dient, besonders bewährt.

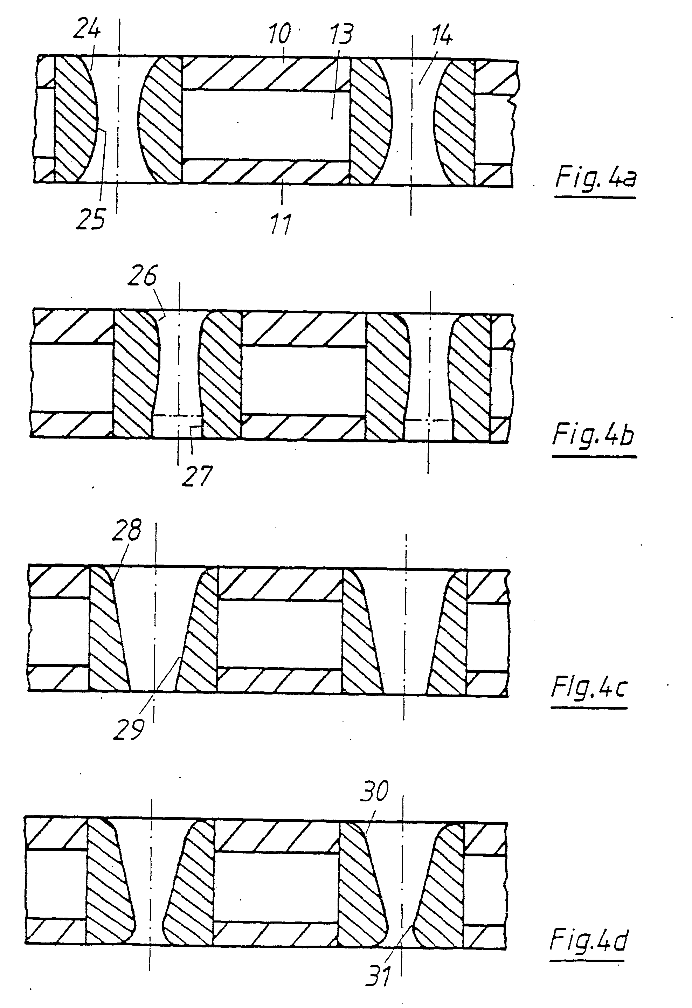

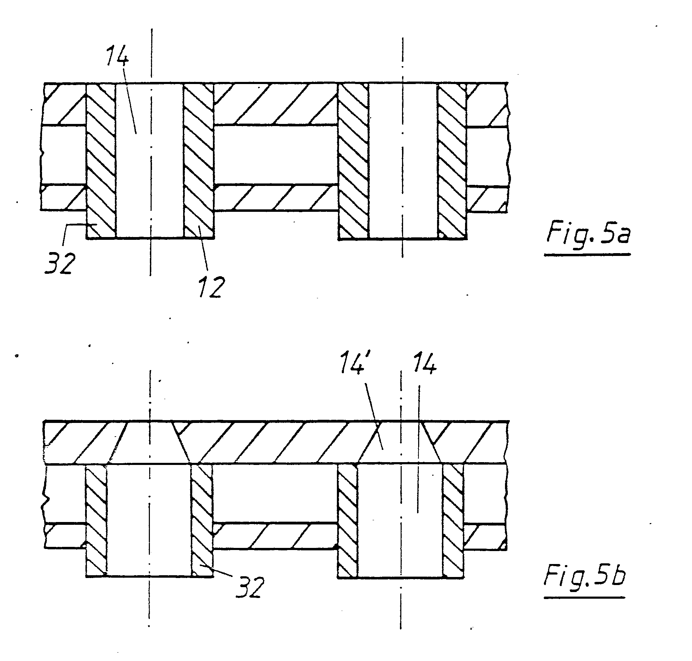

Weitere günstige, jedoch den jeweiligen Verfahrensbedingungen, insbesondere dem eingesetzten Material, gerecht werdende Ausgestaltungen der Distanzstücke 12 zeigen die Fig. 4a, 4b, 4d sowie 5a und 5b.

Gemäss Fig. 4a sind die Distanzstücke beidendig abgerundet und bilden dadurch doppeltkonische Durchlässe 14 für den überhitzten Wasserdampf. Die Wirkung der Kantenabrundung, die z. B. in die Bohrung 14 eingedrungene Materialpartikeln durch die in 15 erhöhte Dampfspannung herausschleudern lässt, kann zwar schon durch einen nur einseitig ausgebildeten Konus 24 erreicht werden, doch führt die zusätzliche Abrundung auch der unteren Kante zu einer erheblich verbesserten Einströmung des Dampfes in die Bohrung, da einer möglichen Wirbelbildung beim Eintritt des Dampfes in die Bohrung entgegengewirkt wird.

Bei der Ausbildung der Distanzstücke 12 nach Fig. 4b geht der untere Konus in eine zylindrische oder auch rechteckige Absatzöffnung 27 über, während der Radius des oberen Konus 26 gegenüber demjenigen von 24 gemäss Fig. 4a etwas verkleinert ist. Es versteht sich, dass der Radius der Abrundung gemäss Fig. 4b auch gleich oder grösser als derjenige der Abrundung nach Fig. 4a sein kann.

Die Form der Bohrung 14 kann sich gemäss Fig. 4c auch von unten beginnend kegelförmig nach oben erweitern 29, um dann wieder mit abgerundeter Kante 28 zu enden.

Die in Fig. 4d dargestellte Ausbildung der Bohrung 14 liegt nach Art einer Venturidüse vor, wobei die Abrundung der Kanten 30 derjenigen von Fig. 4c entspricht, die untere Kantenabrundung 31 jedoch verkleinerten Radius zeigt, der in den Grenzbereich der Ebene der unteren Bodenplatte 11 fällt (vgl. Fig. 2).

Im einfachsten Falle sind gemäss Fig. 5a und 5b auch Rohrstücke als Distanzstücke möglich, deren untere zylindrische Enden wenig über den untersten Plattenabschluss hinaus 32 in die jeweils nachfolgende Behandlungsstufe B, C, D... hineinreichen. Erfahrungsgemäss kann diese Weiterführung 32 etwa 0,5 bis 2,0 mal die Plattendicke von 11 betragen. Eine spezielle Ausbildung derartiger Distanzstücke kann in der oberen Bodenplatte 10 wiederum eine konische Konfiguration 14' besitzen, wodurch die Wirkung der Distanzstücke nach Fig. 2 und 3 in Verbindung mit dem verlängerten Ende 32 noch verstärkt wird.

Es versteht sich, dass jede der vorstehend beschriebenen Formen der Distanzstücke bzw. die Art der Bohrungen 14, 14' eine ganz spezifische Wirkung aufweist, die der Erhöhung bzw. Beibehaltung der Spannung des Dampfes beim Austritt aus den Bohrungen dient, die Kanalausbildung im zu entbenzinierenden Material verhindert, Dampfkondensation entgegenwirkt, den Strippingeffekt begünstigt, Verstopfungen der Bohrungen durch die Materialpartikeln vermeidet eine gleichmässige Einwirkung des Dampfes auf das zu entbenzinierenden Material sicherstellt. Dabei werden erhebliche Dampfmengen eingespart und der Verbrauch an elektrischer Energie, etwa zum Antrieb der Rührelemente, herabgesetzt.

In der Praxis haben sich — ohne hierdurch übliche technische Abweichungen oder spezifische Grössenverhältnisse auszuschliessen — solche Doppelböden 3 oder 4 gemäss Fig. 2 bis 5 bewährt, deren untere Platte 11 eine Dicke (Stärke) von d = ca. 8 bis 15 mm, deren obere Platte 10 eine solche von b = ca. 14 bis 22 mm und deren Plattenabstand c = ca. 12 bis 30 mm beträgt.

Der äussere Durchmesser a der Distanzstücke 12 liegt im allgemeinen zwischen 25 und 75 mm.

Der Abstand e zwischen den einzelnen Distanzstücken 12 — vgl. Fig. 3 — kann gleich, kleiner oder grösser sein als der äussere zylindrische Durchmesser a der Distanzstücke selbst. Im allgemeinen jedoch ist der Abstand e gleich oder grösser als der äussere zylindrische Durchmesser der Distanzstücke. Besonders bewährt hat sich ein Abstand von e = 80 mm bei einem Durchmesser von a = z. B. 50 mm.

Bei nicht kreisrunden zylindrischen over ovalen, sondern quadratischen, rechteckigen oder vieleckförmigen Distanzstücken 12 liegen die Verhältnisse der Abmessungen und Grössen ähnlich.

Bei kegelförmigen Bohrungen 14 gemäss Fig. 2 und 3 mit nach oben sich verjüngendem Kegel bewegt sich die Neigung der Kegelinnenflächen im allgemeinen derart, dass das Verhältnis der beiden Kegelbohrungsflächen f : g etwa bei 2,0/1,5 liegt.

Dieses Öffnungsverhältnis hat sich z. B. bei der Entbenzinierung von hexannassem Sojaschrot mit überhitztem Wasserdampf besonders dann als günstig erwiesen, wenn der Durchmesser der Bohrung im Bereich der unteren Bodenplatte 11 den Wert von ca. 25 mm nicht überschreitet.

Bei einer grosstechnischen Vorrichtung der vorstehend in Anlehnung an Fig. 1 definierten Konstruktion mit drei Behandlungsstufen A, B, C, die von je einem mit Dampf beheizten Doppelboden 3 nach unten abgeschlossen sind, wobei die Gesamtnutzungshöhe der Vorrichtung ca. 5 500 mm beträgt und der innere Durchmesser bei ca. 3 000 mm liegt, weisen die Doppelböden 3 zwischen 60 und 140 Distanzstücke 12 je Quadratmeter Bodenoberfläche auf, so dass die Bohrungen 14 einen Querschnittsanteil von ca. 3 bis 30 % der Gesamtbodenfläche ausmachen.

In einer derartigen Anlage können im laufenden Betrieb ca. 480 t (480 $\times$ 10$^3$ kg) je 24 h hexannasses Sojaschrot mit einem Hexangehalt von bis 33 Gew.-% entbenziniert werden.

Das entbenzinierte Schrot weist einen Resthexangehalt von << 0,01 Gew.-% beim Einsatz von überhitztem Dampf von 205 °C auf und einen Resthexangehalt von < 0,01 Gew.-% beim Einsatz von überhitztem Dampf von 125 °C.

Derartige Werte sind bei Verwendung von nicht überhitztem Dampf nicht realisierbar, auch nicht mit den besonders gestalteten Doppelböden (spezielle Bohrungen) gemäss vorstehend beschriebener Vorrichtung.

Ist der eingesetzte Entbenzinierungsdampf nicht überhitzt, so liegt der Hexangehalt im Schrot beim Einsatz von 130 °C heissem Dampf noch im Bereich von 0,06 % und bei 160 °C heissem Dampf im Bereich von 0,03 %.

Umgekehrt sind aber auch bei Verwendung eines einfach gelochten Bodensystems, eines System also, das nicht die ganz spezifischen Bohrungen der Erfindung aufweist, bei dem also nur kreisrunde

7

oder ähnlich gestaltete Dampfaustrittsöffnungen vorliegen, trotz Einsatzes von überhitztem Dampf die überraschend niedrigen Resthexangehalte nicht zu erzielen.

Der Grund ist darin zu suchen, dass nur die Kombination der Bodenausbildung in Verbindung mit überhitztem, absolut trockenem und mit möglichst hoher Temperatur in die Entbenzinierungsvorrichtung eingebrachtem Dampf zu einem praktisch lösemittelfreien Schrot führt.

Die in Fig. 1 ganz allgemein dargestellte Entbenzinierungsvorrichtung kann, ohne dass der Rahmen der Erfindung verlassen wird, noch vielfach technisch verfeinert werden. So können zur Vervollständigung der Anlage unterhalb der Doppelböden 3, d. h. direkt in den jeweiligen Dampfraum einer der Behandlungsstufen A, B, C, D... führende Anschlüsse für die Einleitung von zusätzlichem Direktdampf, der natürlich auch überhitzt ist, vorgesehen sein. Dieser Dampf dient der Unterstützung des bei 6 gemäss Fig. 1 in die Dampfkammer E eingebrachten überhitzten Dampfes ÜD, etwa bei sehr wasserhaltigem lösemittelnassem Material, bei schwierig zu entbenzinierendem Schrot oder auch bei relativ niedrigen Temperaturen des überhitzten Dampfes, wenn z. B. geeignete Vorrichtungen für eine starke Überhitzung nicht vorhanden sind.

Im gleichen Sinne kann derartiger Zusatzdampf auch über die Rührwelle 2 oder über die Rührelemente 5 eingebracht werden, obwohl eine derartige Massnahme im Bereich der vorliegenden Erfindung nur von untergeordneter Bedeutung ist.

Von besonderer Bedeutung für das erfindungsgemässe Verfahren ist auch die Einstellung einer relativ engen Temperaturspanne der aus Wasserdampf und Lösemittel bestehenden Brüden oberhalb der obersten Verfahrensstufe, d. h. oberhalb des frisch eingebrachten lösemittelnassen Materials.

Dabei spielt auch insgesamt das Temperaturgefälle vom Dampfeintritt bei 6 in die Verteilerkammer E bis zum Brüdenaustritt bei 20 eine entscheidende Rolle.

Zunächst ist die Forderung zu erfüllen, dass der Dampf unterhalb der untersten Bodenplatte 4 — unabhängig von der Anzahl der Behandlungsstufen A, B, C, D... — eine optimal hohe Eigentemperatur aufweist. Zwar sind keine grundsätzlichen Temperaturgrenzen für den überhitzten Dampf gegeben, so dass schon Dampftemperaturen von über 120 °C durchaus brauchbar sind. Aus wirtschaftlichen Gründen zwecks optimaler Nutzung, insbesondere von Grossanlagen, empfiehlt es sich jedoch, Temperaturen von 130 °C möglichst nicht zu unterschreiten, damit bereits beim Dampfeintritt ein gewisser Abstand von der Kondensationstemperatur (100 °C/1 bar) vorhanden ist. Vorteilhaft arbeitet man mit Dampfeingangstemperaturen von über 150, besser von über 180 und gelegentlich auch bis 220 °C.

Diese Temperaturgradienten sind ebenso eine Funktion der übrigen Verfahrensbedingungen und Materialqualitäten wie die Menge an eingesetztem Dampf — die im allgemeinen für jedes Material eingestellt werden muss — oder die Menge des unterhalb des untersten Bodens eingebrachten Dampfes.

Im allgemeinen wird der überhitzte Dampf — ob als reiner Wasserdampf oder im Gemisch mit einem geeigneten Fluid — insgesamt, d. h. also zu 100 % der benötigten Menge, direkt in die Dampfkammer E eingeleitet. Dies ist immer dann der Fall, wenn sich die Stufenzahl A, B, C, D... in der Grössenordnung gemäss Fig. 1 oder weniger Stufen bewegt. Bei mehr als vier Stufen dagegen ist es zweckmässig, die Hauptmenge Dampf wiederum in die Dampfkammer, also in die unterste Kammer bzw. Etage unterhalb des Dampfverteilerbodens 4 einzuführen und ein Teilbetrag, d. h. die Mengendifferenz bis 100 %, in die Brüdenräume der höheren Stufen unter den jeweiligen Stufenabschlussböden 3 einzuleiten. Die äusserste Grenze der Dampfverteilung zwischen der untersten Etage bzw. der Dampfkammer und den Brüdenräumen liegt bei ca. 45 %, d. h. mindestens 45 % des insgesamt benötigten Direktdampfes in überhitzter Form müssen unterhalb des Dampfverteilerbodens 4 — unabhängig von der Anzahl der Stufen — eingebracht werden.

Der überhitzte Dampf wird im allgemeinen vom Dampfkessel des Betriebs geliefert und steht mit einem Druck von durchschnittlich 10 bar zur Verfügung. Beim Eintritt in die Dampfkammer E entspannt er auf 1 bar, da nur in den wenigsten Fällen bei der Entbenzinierung mit Überdruck gearbeitet wird. Steht kein überhitzter Dampf aus dem betriebseigenen Dampfkessel zur Verfügung, so kann auch durch Zwischenschalten eines Überhitzers vor Eintritt des Dampfes in die Dampfkammer E der erforderliche Grad der Überhitzung eingestellt werden. Geeignete Überhitzer sind bekannt, so dass auf ihre Beschreibung hier verzichtet werden kann.

Nur mit überhitztem, absolut kondensatfreiem Dampf ist der bereits mehrfach angesprochene Strippingeffekt realisierbar, und nur so kann das angestrebte Azeotrop Wasserdampf/Lösemittel in seiner idealen Zusammensetzung bei engem Temperaturbereich der Brüden ohne wesentliche Veränderung des Wassergehalts im entbenzinierten Material eingehalten werden.

Im laufenden Betrieb eines Mehretagensystems gemäss Fig. 1 ergeben sich über die Gesamthöhe der Anlage Temperaturdiagramme, die für das erfindungsgemässe Verfahren spezifisch sind und die angestrebten idealen Entbenzinierungsbedingungen wiedergeben. Dies ist anhand der Tabelle I mit Beziehung auf Fig. 6 dargestellt.

Dabei gibt Tabelle 1 die im laufenden Betrieb einer technischen Grossanlage ermittelten Effektivtemperaturen wieder, die sowohl für die Entbenzinierung von hexannassem Sojaschrot als auch von hexannassem Rapsmaterial in einer aus vier Behandlungsstufen (A, B, C, D gemäss Fig. 1 und 6) bestehenden Anlage auftreten.

EP 0 077 436 B2

Tabelle I

| Messstelle | Temperatur an der Messstelle (° C) | |
| --- | --- | --- |
| | Sojaschrot 33% Hexan ca. 15% $H_2O$ | Rapsschrot 30 bis 32% Hexan ca. 9 bis 10% $H_2O$ |
| $T_1$ (Dampf-kammer E) | 180 | 180 |
| $T_2$ (im Material der Stufe D) | 115 bis 116 | 120 bis 122 |
| $T_3$ (Brüden-raum von D) | 115 bis 116 | 120 bis 121 |
| $T_4$ (im Mate-rial von C) | 112 bis 114 | 118 bis 120 |
| $T_5$ (Brüden-raum von C) | 112 bis 115 | 118 bis 119 |
| $T_6$ (im Mate-rial von B) | 112 bis 114 | 115 bis 116 |
| $T_7$ (im Mate-rial von A) | 64 bis 66 | 67 bis 68 |
| $T_8$ (Brüden-abzug) | 66 bis 68 | 66 bis 68 |
| Hexangehalt | ≪ 0,01% | < 0,01% |

Wie Tabelle I zeigt, werden in den einzelnen Verfahrensstufen bis einschliesslich Stufe B — Messstelle $T_6$ im Material der Stufe B — Temperaturen aufrechterhalten, die mit 112 bzw. 115 °C erheblich oberhalb der Kondensationstemperatur des Wasserdampfes liegen. Erst im Bereich des frisch eingebrachten hexannassen Materials, d. h. im Material der Stufe A — Messstelle $T_7$ — tritt ein starker Temperaturabfall auf, der aber nicht durch kondensierten Wasserdampf hervorgerufen ist, sondern aus der Bildung des Azeotrops Dampf/Hexan resultiert.

Ein Vergleichsversuch zeigte, dass unter identischen technischen Voraussetzungen, d. h. selbst beim Einsatz einer Vorrichtung gemäss der Erfindung, bei Verwendung von nassem Dampf bereits im Bereich der Messstelle $T_2$, nur noch wenig über 100 °C (103 bis 105 °C) gemessen wurden. Die Messstelle $T_4$ zeigte für Sojaschrot 98 °C, für Raps 99 °C. Messstelle $T_6$ zeigte für Soja 80 °C, für Raps 81 °C. Die Brüden mussten dagegen durch erheblichen Zusatzdampf auf über 70 °C gehalten werden, um zu einem entbenzinierten Material zu gelangen, das aber immer noch 0,06 Gew.-% (Soja) bzw. 0,03 Gew.-% (Raps) an Resthexan enthielt.

Wie bereits gesagt, ist bei der Verwendung von nicht überhitztem Dampf ein Vielfaches der Dampfmenge notwendig, da der Kondensation von Wasserdampf sonst nicht begegnet werden kann. Dies bedeutet aber gleichzeitig auch eine Mehrbelastung der Antriebswelle für den Rührer, da das Material selbst in einem verstärkt wasserhaltigen Zustand verbleibt, der die Drehbewegung der Rührelemente hemmt.

Es sei hier grundsätzlich darauf hingewiesen, dass beim Einsatz von überhitztem Dampf in einer Vorrichtung ohne die erfindungsgemässe Ausbildung der Etagenböden, wie sie also etwa aus « Fette-Seifen-Anstrichmittel » (loc. cit.) bekannt ist, die erfindungsgemässen äusserst niedrigen Hexanrestgehalte, die enge Temperaturspanne der Dampf/Hexan-Brüden verbunden mit der hohen Wirtschaftlichkeit (Dampfmenge, Energie für Rührerantriebswelle usw.) bei weitem nicht erreicht werden.

Zur Dampfeinsparung durch das erfindungsgemässe Verfahren sei noch auf nachstehende Betrachtung verwiesen, die die einleitend aufgestellte Wärmebilanz ergänzt. Dabei tritt die Bedeutung von überhitztem Dampf für die Entbenzinierung von lösemittelnassem Material nochmals in den Vordergrund.

Bekanntlich bilden die paraffinischen Kohlenwasserstoffe $C_nH_{2n+2}$ mit $C_4$ bis $C_9$, die allein in technischen Extraktionsverfahren der Öl- und Fettindustrie Bedeutung besitzen, mit Wasserdampf mehr oder weniger ausgeprägte Azeotrope, die allein für ein optimales Dampf/Lösemittel-Verhältnis in den Brüden bei der Entbenzinierung verantwortlich sind. Die bereits bei wenig oberhalb 60 °C (Normaldruck) siedenden technischen Hexane (n-Hexan : 69 °C Siedepunkt ; iso-Hexan : 60 °C ; Benzin mit über 50 % n-Hexan : 62 bis 64 °C) tragen aus Gründen der Azeotropbildung entsprechende Anteile Wasserdampf als Schleppmittel aus dem Entbenzinierungssystem aus.

Da der Gehalt an Wasserdampf in den als Azeotrop vorliegenden Brüden der Entbenzinierung eine Funktion der Brüdentemperatur darstellt, ist die Einhaltung einer bestimmten Brüdentemperatur zur

9

optimalen Nutzung des Wasserdampfes zwecks Ausbildung des Azeotrops von entscheidender Bedeutung.

Die von 1 kg Hexan aufgenommene bzw. als Azeotrop mitgeschleppte Wasserdampfmenge in Abhängigkeit von der Brüdentemperatur zeigt Tabelle II in Verbindung mit Fig. 7.

Tabelle II

| Brüdentemperatur (°C) ($T_a$ in Fig. 6; D+H) | Wasserdampf je Kilo Hexan (kg) |
|---|---|
| 60 | 0,05 |
| 65 | 0,075 |
| 66 | 0,080 |
| 67 | 0,085 |
| 68 | 0,090 |
| 70 | 0,100 |
| 75 | 0,135 |
| 80 | 0,200 |
| 85 | über 0,300 |

Aus den Werten der Tabelle II geht hervor, dass die Temperatur der Brüden (D + H in Fig. 6) in jedem Fall so niedrig als möglich zu halten ist.

Schon bei einer Brüdentemperatur von 70 °C schleppt das Lösemittel, im vorliegenden speziellen Falle das Hexan, 0,1 kg Wasserdampf je Kilo Hexan ungenutzt aus der Anlage aus. Bei 80 °C Brüdentemperatur sind dies bereits 0,2 kg und bei 85 °C über 0,3 kg Wasserdampf je Kilo aus der Anlage austretenden Hexans.

Beim Einsatz von überhitztem Dampf von möglichst hoher Temperatur (vgl. Tabelle I ; 180 °C, überhitzt) bereitet die Einstellung einer Brüdentemperatur ($T_8$ bzw. D + H) von 66 bis 68 °C selbst im Grossbetrieb von mehr als 2 500 t/24 h Materialdurchsatz keine Schwierigkeit. Es wird der vom ausgetriebenen Hexan ungenutzt mitgeschleppte Wasserdampf auf ein Minimum von ca. 90 g pro Kilo Hexan (68 °C Brüden) reduziert.

Umgekehrt sind bei Verwendung von nicht überhitztem Dampf Brüdentemperaturen von über 70 °C, bedingt durch die erheblichen zusätzlichen Dampfmengen sogar über 80 °C notwendig, um einen möglichst hohen Entbenzinierungsgrad zu erreichen. Derartig hohe Brüdentemperaturen haben aber zur Folge, dass gemäss Tabelle II bei 70 °C-Brüden ca. 100 g Dampf je Kilo Hexan und bei 80 °C-Brüden bereits 200 g Dampf je Kilo Hexan ungenutzt die Anlage passieren, d. h., der allein durch Verlust bedingte Dampfmehraufwand beträgt bei 80 °C-Brüden bereits mehr als das Doppelte des Dampfaufwands für 66-68 °C-Brüden. Letztere sind aber nur mit überhitztem Dampf zu erreichen.

Es sei abschliessend noch grundsätzlich darauf hingewiesen, dass in den Fig. 1 bis 5, insbesondere in Fig. 1, die erfindungsgemässe Vorrichtung nur im Schema dargestellt ist. Die jedem Durchschnittsfachmann geläufigen Hilfselemente wie Temperaturmessstellen, Dampfein- und -ableitungen, Isolierungen, Gehbühnen usw. sind nicht eingetragen. Schaugläser 23 wurden als beispielhaft für das Zubehör der Anlage eingezeichnet. Der Stutzen 6″ dient der Einleitung von Heizdampf für den Boden 4 oberhalb der Dampfkammer E.

## Patentansprüche

1. Verfahren zum Entbenzinieren von bei der Extraktion mit organischen Lösemitteln anfallendem Rückstandsmaterial mit Wasserdampf oder wasserdampfhaltigen Fluiden im kontinuierlichen Betrieb im Gegenstrom, wobei das zu entbenzinierende lösemittelnasse Material durch eigene Schwerkraft über eine oder mehrere Behandlungsstufen nach unten fallend, dem Wasserdampf oder dampfhaltigen Fluid entgegengeführt wird, die einzelnen Behandlungsstufen durch Lochplatten mit Überlauforganen begrenzt sind und wenig oberhalb der Lochplatten Rührorgane bewegt werden, und daß der Raum unterhalb der untersten Lochplatte der Verteilung des Wasserdampfes dient, und die die jeweiligen Behandlungsstufen begrenzenden Lochplatten als mit Dampf beheizbare Doppelböden ausgebildet sind, deren Bohrungen aus einzelnen durchbohrten Distanzstückengefertigt sind, die einen Bohrungsquerschnitt aufweisen, der für den nach oben strömenden Wasserdampf bzw. das wasserdampfhaltige Fluid, nicht aber für das auf den Böden bewegte Material durchgängig ist, dadurch gekennzeichnet, daß der zum Entbenzinieren eingesetzte Wasserdampf in überhitzter Form mit einer Temperatur von mindestens 120 °C (Normaldruck), insbesondere mindestens 130-180 °C, zweckmäßig bis 220 °C vorliegt, daß der überhitzte Wasserdampf zu mindestens 45 %, insbesondere aber bis zu 100 %, unterhalb der untersten, der Dampfverteilung dienenden Lochplatte eingeführt wird, und daß die gebildeten Brüden aus Wasserdampf und Lösemittel mit einer Temperatur von 64-69 °C abgezogen werden.

2. Verfahren nach Anspruch 1, dadurch gekennzeichnet, daß der überhitzte Wasserdampf, ob als solcher oder in einem Fluid vorliegend, eine Temperatur von 220 °C (1 bar) und darüber aufweist.

3. Verfahren nach Anspruch 2, dadurch gekennzeichnet, daß die Temperatur der aus Wasserdampf und Lösemittel gebildeten Brüden zwischen 66 und 68 °C beträgt.

4. Verfahren nach Ansprüchen 1-3, dadurch gekennzeichnet, daß als zu entbenzinierendes Material der hexanhaltige Rückstand aus der Extraktion von Soja-, Raps- und Sonnenblumenmaterial eingesetzt wird.

5. Vorrichtung zur Durchführung des Verfahrens nach Ansprüchen 1-4, bestehend aus einem vorwiegend zylindrisch ausgebildeten, vertikal angeordneten Reaktor, der in einzelne Behandlungsstufen unterteilt ist, die ihrerseits durch Lochplatten (3) mit Überlauforganen (7) begrenzt sind, Rühr- oder Krälarmen (5), die an einer gemeinsamen Welle (2) befestigt und durch diese wenig oberhalb der die Behandlungsstufen begrenzenden Lochplatten (3) bewegt werden, wobei die die Behandlungsstufen (A...D etc.) begrenzenden Lochplatten als mit Dampf beaufschlagbare Doppelböden (3) ausgebildet sind, deren Lochbohrungsquerschnitte für den der Entbenzinierung dienenden überhitzten Wasserdampf bzw. das diesen enthaltende Fluid, nicht aber für das auf den Doppelböden (3) bewegte Material durchgängig ist, wobei die Lochbohrungen (14) durch einzelne durchbohrte Distanzstücke (12) gebildet sind, dadurch gekennzeichnet, daß der unterste Boden (4) die gleiche Konstruktion wie die Böden (3) aufweist, und daß unterhalb des untersten Bodens (4) ein Dampfeinleitungsstutzen (6) vorgesehen ist.

6. Vorrichtung nach Anspruch 5, dadurch gekennzeichnet, daß die unterste, ausschließlich der Verteilung des überhitzten Wasserdampfes bzw. des diesen enthaltenden Fluids dienende Dampfeingangszone (E) insgesamt durch Dampf (16, 26) beheizbar ist.

7. Vorrichtung nach Ansprüchen 5 oder 6, dadurch gekennzeichnet, daß die Bohrungen (14) der Distanzstücke (12) eine sich von der unteren Bodenplatte (11) zur oberen Bodenplatte (10) des Doppelbodens (3) verjüngende kegelartige Konfiguration aufweisen.

8. Vorrichtung nach Ansprüchen 5 oder 6, dadurch gekennzeichnet, daß die Bohrungen (14) der Distanzstücke (12) als doppeltkonischer Durchlaß mit Kantenabrundung (24) und kleinstem Querschnitt in der Bodenmitte (25) ausgebildet sind.

9. Vorrichtung nach Ansprüchen 5 oder 6, dadurch gekennzeichnet, daß die Bohrungen (14) im Bereich der oberen Bodenplatte (10) abgerundete, konusförmige Konfiguration (26) aufweisen, während im Bereich der unteren Bodenplatte (11) eine zylindrische oder rechteckige Absatzöffnung (27) vorliegt.

10. Vorrichtung nach Ansprüchen 5 oder 6, dadurch gekennzeichnet, daß die Bohrungen (14) der Distanzstücke (12) eine im Bereich der unteren Bodenplatte (11) kegelförmig sich nach oben erweiternde Form besitzen, die im Bereich der oberen Bodenplatte (10) in eine konusförmig abgerundete Konfiguration (28) übergeht.

11. Vorrichtung nach Ansprüchen 5 oder 6, dadurch gekennzeichnet, daß die Bohrungen (14) der Distanzstücke (12) nach Art einer Venturidüse (30, 31) ausgebildet sind.

12. Vorrichtung nach Ansprüchen 5 oder 6, dadurch gekennzeichnet, daß die Bohrungen (14) als zylindrische Rohrstücke mit über den unteren Bodenteil (11) hinausreichendem Endstück (32) ausgebildet sind.

13. Vorrichtung nach Ansprüchen 5 oder 6, dadurch gekennzeichnet, daß die Distanzstücke (12) als zylindrische Rohre ausgebildet sind, wobei diese Rohre gegen die untere Kante der oberen Bodenplatte (10) abschließen und die Bohrungen (14) innerhalb der oberen Bodenplatte (10) durch sich nach oben verjüngende Kegel (14') gebildet werden.

14. Vorrichtung nach Ansprüchen 5-13, dadurch gekennzeichnet, daß bei einer unteren Plattenstärke (11) von d = 8-15 mm und einer oberen Plattenstärke (10) von b = 14-22 mm der Dampfraum (13) eine Höhe c von ca. 12-30 mm aufweist und der vorwiegend zylindrische Durchmesser a der Distanzstücke (12) ca. 25-75 mm beträgt.

15. Vorrichtung nach Ansprüchen 5-14, dadurch gekennzeichnet, daß die dampfbeheizten Doppelböden (3) zwischen 40 und 200, insbesondere zwischen 60 und 140 durchbohrte Distanzstücke (12) je m² Bodenfläche aufweisen und der Querschnittsanteil aller Bohrungen zwischen 3 und 30 %, insbesondere zwischen 4,5 und 20 % der Gesamtbodenfläche beträgt.

16. Vorrichtung nach Ansprüchen 5-15, dadurch gekennzeichnet, daß unterhalb der Doppelböden (3) Anschlußstutzen zur Einspeisung von überhitztem Dampf in die jeweiligen Brüdenräume vorhanden sind.

17. Vorrichtung nach Ansprüchen 5-16, dadurch gekennzeichnet, daß sowohl die Rührarme (5) als auch die Drehwelle (2) zur direkten Einspeisung von überhitztem Dampf in die Behandlungsstufen (A, B, C, D...) ausgebildet sind.

**Claims**

1. Process for the removal of white spirit remaining in residue material after the extraction with organic solvents, said removal being effected with steam or steam-containing fluids in continuous operation in counter-current, wherein the solvent-wet material to be freed from white spirit is lead towards the steam or the steam containing fluid, falling downwardly by its own gravity through one or a plurality of treatment stages, the individual treatment stages are defined by perforated plates having

EP 0 077 436 B2

overflow means, and agitating means are moved slightly above said perforated plates, and the space below the lowest perforated plate serves to distribute the steam and the perforated plates defining the individual treatment stages are designed as double bottoms capable of being heated by means of steam, the bores of said double bottoms being made of single bored spacers having a bore cross section permeable for the upwardly flowing steam or the steam-containing fluid, not, however, for the material moved on the bottoms, characterized in that the steam used for removing the white spirit is present in superheated from at a temperature of at least 120 °C (normal pressure), in particular at least 130-180 °C, expediently up to 220 °C, that at least 45 %, particularly up to 100 %, of the superheated steam is introduced below the lowest perforated plate serving to distribute the steam, and that the vapors formed of steam and solvent are drawn off at a temperature of 64 to 69 °C.

2. Process according to claim 1, characterized in that the superheated steam, no matter whether it is present as such or in a fluid, has a temperature of 220 °C (1 bar) or more.

3. Process according to claim 2, characterized in that the temperature of the vapors formed of steam and solvent is between 66 and 68 °C.

4. Process according to claims 1 to 3, characterized in that as material to be freed from white spirit there is used the hexane-containing residue from the extraction of soy, rape and sunflower material.

5. Apparatus for performing the process according to claims 1 to 4, consisting of a mainly cylindrical, vertically arranged reactor which is subdivided into individual treatment stages which in turn are defined by perforated plates (3) having overflow means (7), agitating or rabble arms (5) secured on a mutual shaft (2) and moved by the latter slightly above the perforated plates (3) defining the treatment stages, said perforated plates defining the treatment stages (A...D etc.) being designed as double bottoms (3) adapted to have steam admitted thereto, the bore hole cross sections of which are permeable for the superheated steam or the fluid containing said steam serving for the removal of white spirit, but not for the material moved on the double bottoms (3), the bore holes (14) being formed by single bored spacers (12), characterized in that the lowest bottom (4) shows the same construction as bottoms (3), and that below the lowest bottom (4) there is provided a steam inlet piece (6).

6. Apparatus according to claim 5, characterized in that the lowest steam inlet zone (E), which serves exclusively for the distribution of superheated steam or the fluid containing said steam, is totally heatable by steam (16, 26).

7. Apparatus according to claims 5 or 6, characterized in that the bores (14) of spacers (12) are conical of configuration tapering from the lower bottom plate (11) to the upper bottom plate (10) of the double bottom (3).

8. Apparatus according to claims 5 or 6, characterized in that the bores (14) of spacers (12) are designed as double-cone passages having rounded edges (24) and having the smallest diameter in the middle of the bottom.

9. Apparatus according to claims 5 or 6, characterized in that the bores (14) in the region of the upper bottom plate (10) are of rounded, conical configuration (26) while a cylindrical or rectangular offset opening (27) is provided in the region of the lower bottom plate (11).

10. Apparatus according to claims 5 or 6, characterized in that the bores (14) of spacers (12) have a conical upwardly enlarging configuration in the region of the lower bottom plate (11), said configuration changing in the region of the upper bottom plate (10) into a conically rounded configuration (28).

11. Apparatus according to claims 5 or 6, characterized in that the bores (14) of spacers (12) are formed in the manner of a Venturi tube (30, 31).

12. Apparatus according to claims 5 or 6, characterized in that the bores (14) are formed as cylindrical tube pieces with an end piece (32) extending beyond the lower bottom element (11).

13. Apparatus according to claims 5 or 6, characterized in that the spacers (12) are designed as cylindrical tubes, said tubes terminating against the lower edge of the upper bottom plate (10) and the bores (14) within the upper bottom plate (10) being formed by upwardly tapering cones (14').

14. Apparatus according to claims 5 to 13, characterized in that with a lower plate thickness (11) of $d = 8$-15 mm and an upper plate thickness (10) of $b = 14$-22 mm, the vapor space (13) has a height c of approx. 12-30 mm and the mostly cylindrical diameter a of the spacers (12) is approx. 25-75 mm.

15. Apparatus according to claims 5 to 14, characterized in that the steam-heated double bottoms (3) include between 40 and 200, particularly 60 and 140, bored spacers (12) per $m^2$ of bottom surface and the cross-sectional proportion of all bores is between 3 and 30 %, particularly between 4.5 and 20 % of the total bottom surface.

16. Apparatus according to claims 5 to 15, characterized in that below the double bottoms (3) there are provided connection pieces for feeding superheated steam to the respective vapor spaces.

17. Apparatus according to claims 5 to 16, characterized in that the agitating arms (5) as well as the rotating shaft (2) are designed for the direct feeding of superheated steam into the treatment stages (A, B, C, D...).

**Revendications**

1. Procédé pour l'extraction du solvant ou le déparaffinage de matières résiduelles d'une extraction

12

par des solvants organiques en continu et à contre-courant par de la vapeur d'eau ou des fluides contenant de la vapeur d'eau, dans lequel la matière à déparaffiner mouillée par le solvant traverse, sous l'effet de la pesanteur, de haut en bas et en contre-courant de la vapeur d'eau ou du fluide en contenant, une ou plusieurs zones de traitement, les diverses zones de traitement étant délimitées par des plateaux perforés avec des dispositifs de trop-plein et surmontés à peu de distance d'organes mélangeurs, l'enceinte située sous le plateau perforé inférieur servant à la répartition de la vapeur d'eau et les plateaux perforés délimitant les diverses zones de traitement étant des plateaux doubles, pouvant être chauffés à la vapeur et dont les ouvertures sont constituées de pièces d'écartement perforées individuelles, dont la section ou lumière permet le passage de la vapeur d'eau ou du fluide contenant de la vapeur d'eau ascendant, mais ne laisse pas passer la matière en mouvement sur les plateaux, caractérisé en ce que la vapeur d'eau utilisée pour le déparaffinage est de la vapeur surchauffée d'une température (à la pression normale) d'au moins 120 °C et en particulier de 130 à 180 °C et pouvant aller jusqu'à 220 °C, 45 % au moins et de préférence jusqu'à 100 % de cette vapeur surchauffée étant introduits sous le plateau perforé inférieur servant à la répartition de celle-ci, les vapeurs produites, composées de vapeur d'eau et de solvant, étant soutirées à une température d'environ 64 à 69 °C.

2. Procédé suivant la revendication 1, caractérisé en ce que la vapeur d'eau surchauffée telle quelle ou mélangée à un fluide possède, à la pression de 1 bar, une température de 220 °C ou plus.

3. Procédé suivant la revendication 2, caractérisé en ce que les vapeurs formées de vapeur d'eau et de solvant possèdent une température comprises entre 66 et 68 °C.

4. Procédé suivant les revendications 1 à 3, caractérisé en ce que la matière de déparaffiner est le résidu d'une extraction à l'hexane de graines de soja, de colza ou de tournesol.

5. Installation pour la réalisation du procédé suivant les revendications 1 à 4, constituée d'un réacteur essentiellement cylindrique, disposé verticalement, subdivisé en plusieurs zones de traitement, délimitées par des plateaux perforés (3) avec des dispositifs de trop-plein (7), ces plateaux perforés (3) étant surmontés à peu de distance de bras mélangeurs et (ou) racleurs (5), fixés à et mis en rotation par un arbre commun (2), les plateaux perforés délimitant les zones de traitement (A...D, etc.) étant des plateaux doubles (3), pouvant être chauffés par la vapeur et dont les sections ou lumières des ouvertures (14), formées par des pièces d'écartement (12) percées distinctes, permettent le passage de la vapeur d'eau surchauffée ou du fluide contenant de la vapeur d'eau surchauffée, servant au déparaffinage, mais ne laissent pas passer la matière en mouvement sur les plateaux doubles (3), caractérisée en ce que le plateau inférieur (4) est d'une construction identique à celle des plateaux (3) et qu'un ajutage (6) pour l'introduction de la vapeur est disposé en dessous du plateau inférieur (4).

6. Installation suivant la revendication 5, caractérisée en ce que la zone inférieure (E) servant uniquement à l'introduction et à la distribution de la vapeur d'eau surchauffée ou du fluide contenant de la vapeur d'eau surchauffée peut être chauffée en totalité à la vapeur (16, 26).

7. Installation suivant les revendications 5 et 6, caractérisée en ce que les ouvertures (14) des pièces d'écartement (12) possèdent une forme conique, allant en se rétrécissant du plateau inférieur (11) vers le plateau supérieur (10) du plateau double (3).

8. Installation suivant les revendications 5 et 6, caractérisée en ce que les ouvertures (14) des pièces d'écartement (12) ont la forme d'un double cône à arêtes arrondies (24), la section la plus étroite étant située au milieu (25) du plateau.

9. Installation suivant les revendications 5 et 6, caractérisée en ce que les ouvertures (14) possèdent au voisinage du plateau supérieur (10) une forme conique arrondie (26) et au niveau du plateau inférieur (11) une lumière (27) cylindrique ou rectangulaire.

10. Installation suivant les revendications 5 et 6, caractérisée en ce que les ouvertures (14) des pièces d'écartement (12) possèdent une forme conique allant en s'élargissant du plateau inférieur (11) vers le plateau supérieur (10), l'extrémité supérieure ayant une forme conique arrondie (28).

11. Installation suivant les revendications 5 et 6, caractérisée en ce que les ouvertures (14) des pièces d'écartement (12) possèdent la forme d'un tube venturi (30, 31).

12. Installation suivant les revendications 5 et 6, caractérisée en ce que les passages (14) sont constitués d'ajutages tubulaires cylindriques, dont l'extrémité inférieure (32) fait saillie par rapport au plateau inférieur (11).

13. Installation suivant les revendications 5 et 6, caractérisée en ce que les pièces d'écartement (12) sont constituées de tubes cylindriques, dont l'extrémité supérieure est de niveau avec le bord inférieur du plateau perforé supérieur (10), les ouvertures (14) dans le plateau supérieur (10) possédant la forme d'un cône (14') allant en se rétrécissant vers le haut.

14. Installation suivant les revendications 5 à 13, caractérisée en ce que, pour un plateau inférieur (11) d'une épaisseur d de 8 à 15 mm et un plateau supérieur (10) d'une épaisseur b de 14 à 22 mm, la chambre à vapeur (13) possède une hauteur c d'environ 12 à 30 mm et les pièces d'écartement (12) sensiblement cylindriques un diamètre a d'environ 25 à 75 mm.

15. Installation suivant les revendications 5 à 14, caractérisée en ce que les plateaux doubles (3), chauffés par la vapeur, comportent entre 40 et 200 et en particulier entre 60 et 140 pièces d'écartement perforées (12) par m$^2$ de surface des plateaux et la section des ouvertures représente entre 3 et 30 et en particulier entre 4, 5 et 20 % de la surface totale des plateaux.

16. Installation suivant les revendications 5 à 15, caractérisée en ce que, sous chaque double plateau

13

(3), est prévu au moins un ajutage de raccordement pour l'introduction de vapeur surchauffée dans chacune des zones de traitement.

17. Installation suivant les revendications 5 à 16, caractérisée en ce que les bras mélangeurs (5) aussi bien que l'arbre de rotation (2) sont conçus pour pouvoir servir à l'injection directe de vapeur surchauffée dans chacune des zones de traitement (A, B, C, D, ...).

_Fig.1_

_Fig.2_

_Fig.3_

EP 0 077 436 B2

Fig.4a

Fig.4b

Fig.4c

Fig.4d

3

Fig.5a

Fig.5b

Fig.6

Fig.7